# EUROPÄISCHE PATENTSCHRIFT

(11) **EP 0 800 685 B1**
(45) Veröffentlichungstag und Bekanntmachung des Hinweises auf die Patenterteilung: **08.07.1998**
(21) Anmeldenummer: 96904782.8
(22) Anmeldetag: 14.02.1996
(51) Int. Cl.: G06K 17/00

(54) **VERFAHREN UND VORRICHTUNG ZUM ZUSAMMENFÜHREN UND VERBINDEN VON KUNSTSTOFFKARTEN UND BEDRUCKTEN KARTENTRÄGERN**
METHOD AND DEVICE FOR ASSEMBLING AND ATTACHING PLASTIC CARDS AND PRINTED CARD-CARRIERS
PROCEDE ET DISPOSITIF DE POSITIONNEMENT ET D'ASSEMBLAGE DE CARTES EN MATIERE PLASTIQUE ET DE POCHETTES IMPRIMEES

(30) Priorität: 08.03.1995 DE 19508282
(43) Veröffentlichungstag der Anmeldung: 15.10.1997
(73) Patentinhaber: BÖWE SYSTEC AG, 86159 Augsburg (DE)
(72) Erfinder: WEINMANN, Karlheinz, D-86919 Utting (DE); SCHMID, Eduard, D-86836 Untermeitingen (DE); WATZEK, Thomas, D-86159 Augsburg (DE)
(74) Vertreter: Schoppe, Fritz, Dipl.-Ing.
(86) Internationale Anmeldenummer: EP9600640
(87) Internationale Veröffentlichungsnummer: WO9627850

(56) Entgegenhaltungen:
- EP-A- 0 440 814
- WO-A-83/00401
- WO-A-86/04170
- WO-A-93/04433

## Beschreibung

Die vorliegende Erfindung bezieht sich auf ein Verfahren und eine Vorrichtung zum Zusammenführen und Verbinden von Kunststoffkarten, die mit einer Identifikationsmarkierung versehen sind, und bedruckten Kartenträgern, die den jeweiligen Kunststoffkarten zugeordnet sind.

Allgemein können mit bekannten Systemen Kunststoffkarten, wie z.B. dicke Kunststoffkarten vom Typ CR-80, mit Kartenträgern automatisch in variabler Stückzahl verbunden (appliziert) werden. Die mit Kunststoffkarten versehenen Kartenträger werden dann beispielsweise in einer Kuvertierstation in Kuverts verpackt und entweder geschuppt abgelegt oder einer weiteren Verarbeitung zugeführt, wie z.B. dem Sortieren oder Umreifen.

Bei einem bekannten Verfahren und einer bekannten Vorrichtung werden vorsortierte und personalisierte Kunststoffkarten auf vorsortierte und personalisierte Kartenträger aufgebracht. Hierbei bedeutet die Bezeichnung "personalisiert", daß die Kunststoffkarte bzw. der Kartenträger bereits mit den notwendigen Angaben, wie z.B. Name, Adresse etc., versehen ist. Die Kartenträger können hierbei aus einem Endlosstapel oder aus einem Einzelblattstapel zugeführt werden.

In Fig. 5 ist eine bekannte Vorrichtung zum Applizieren von Kunststoffkarten und Kartenträgern dargestellt. Die Vorrichtung ist in ihrer Gesamtheit mit dem Bezugszeichen 500 versehen.

Bei dieser bekannten Vorrichtung sind die Kunststoffkarten in einer Revolvereinrichtung 502 enthalten, die vier Magazine 504 einschließt. Aus der Revolvereinrichtung 502 werden einzelne Kunststoffkarten 506 ausgegeben, die einer Leseeinrichtung 508 zugeführt werden. Die Zuführung der einzelnen Karten zu den unterschiedlichen Stationen erfolgt über sogenannter Stoppstellen 510, an denen die Karten so lange verweilen, bis von einer nachfolgenden Station ein Signal erhalten wird, das anzeigt, daß die nachfolgende Station zur Aufnahme der Karte bereit ist.

In der Leseeinrichtung 508 wird eine Identifikationsnummer (ID-Nummer) der Kunststoffkarte 506 gelesen. Eine Verarbeitungseinrichtung (VE) 512 erfaßt und speichert diese. Anschließend wird die Kunststoffkarte 506 über eine Mehrzahl von Stoppstellen 510 zu einer Appliziereinrichtung 514 geleitet. Vor dem Zuführen der Kunststoffkarte 506 zu der Appliziereinrichtung 514 kann diese mit einem Klebeetikett an einer Station 516 versehen werden, um die nachfolgende Verbindung mit dem Kartenträger sicherzustellen.

Aus einer zweiten Richtung, die nicht der Zuführungsrichtung der Kunststoffkarte 506 zu der Appliziereinrichtung 514 entspricht, wird der Kartenträger zugeführt (Pfeil 518).

Der Kartenträger ist in einem Stapel 520 enthalten, der die Kartenträger in einer vorsortierten Form enthält. Die Kartenträger weisen bereits, wie es oben beschrieben wurde, die entsprechenden Daten, wie z. B. den Namen und die Adresse des Kartenempfängers, auf.

Aus dem Stapel 520 wird der Kartenträger einem Lesegerät 522 zugeführt, das eine auf dem Kartenträger aufgedruckte Identifikationsnummer liest. Diese Identifikationsnummer wird mit der Identifikationsnummer derjenigen Karte verglichen (Pfeil 524), die sich an der letzten Stoppstelle vor der Appliziereinrichtung 514 befindet. Stimmen die Identifikationsnummern überein, so erfolgt eine Verbindung der Kunststoffkarte und des Kartenträgers.

Bei dieser bekannten Vorrichtung 500 sind alle Komponenten durch den gleichen Systemtakt gesteuert. Das heißt, daß die Anzahl der Takte, die verstreichen, bis eine Kunststoffkarte nach der Erfassung der Identifikationsnummer bei 508 die Appliziereinrichtung 514 erreicht, bekannt ist, so daß abhängig von dieser bekannten Laufzeit die Zuführung der Kartenträger vom Stapel 520 und die Überprüfung der Identifikationsnummern derart gesteuert werden kann, daß der Kartenträger die Appliziereinrichtung 514 zum gleichen Zeitpunkt wie die zu diesem Kartenträger gehörige Kunststoffkarte 506 erreicht.

Ein Nachteil dieser bekannten Vorrichtung besteht darin, daß sowohl die Kunststoffkarten als auch die Kartenträger vorsortiert sein müssen, und daß die Kartenträger ferner bereits personalisiert sein müssen. Dies führt zu einer erheblichen Einschränkung der Flexibilität einer solchen Vorrichtung.

Ausgehend von diesem Stand der Technik liegt der vorliegenden Erfindung die Aufgabe zugrunde, ein Verfahren und eine Vorrichtung zum Zusammenführen und Verbinden von Kunststoffkarten und Kartenträgern zu schaffen, daß eine erheblich verbesserte Flexibilität aufweist.

Diese Aufgabe wird durch ein Verfahren zum Zusammenführen und Verbinden von Kunststoffkarten und Kartenträgern nach Anspruch 1 und durch eine Vorrichtung zum Zusammenführen und Verbinden von Kunststoffkarten und Kartenträgern nach Anspruch 8 gelöst.

Die vorliegende Erfindung schafft ein Verfahren zum Zusammenführen und Verbinden von Kunststoffkarten, die mit einer Identifikationsmarkierung versehen sind, und bedruckten Kartenträgern, die den jeweiligen Kunststoffkarten zugeordnet sind, mit folgenden Schritten:
a) Bereitstellen der Kunststoffkarte;
b) Erfassen der Identifikationsmarkierung der Kunststoffkarte;
c) Zuordnen einer Druckauftragsnummer zu der Kunststoffkarte;
d) Auslesen einer Datenbank mittels der Identifikationsmarkierung;
e) Bedrucken des Kartenträgers mit aus der Datenbank ausgelesenen Daten sowie mit der Druckauftragsnummer;
f) Erfassen der Druckauftragsnummer des Kartenträgers vor dem Verbinden des Kartenträgers mit der Kunststoffkarte;
g) Bestimmen, ob die Druckauftragsnummer der Kunststoffkarte, die vor dem Verbinden mit dem Kartenträger steht, mit der im Schritt f) erfaßten Druckauftragsnummer übereinstimmt; und
h) falls die Druckauftragsnummer der Kunststoffkarte und des Kartenträgers übereinstimmen, Zusammenführen und Verbinden der Kunststoffkarte und des Kartenträgers.

Die vorliegende Erfindung schafft eine Vorrichtung zum Zusammenführen und Verbinden von Kunststoffkarten, die mit einer Identifikationsmarkierung versehen sind, und bedruckten Kartenträgern, die den jeweiligen Kunststoffkarten zugeordnet sind, mit folgenden Merkmalen:
- einer Trägereinrichtung, in der die Kunststoffkarten enthalten sind;
- einer Einrichtung zum Erfassen der Identifikationsmarkierung der Kunststoffkarte und zum Zuordnen einer Druckauftragsnummer zu der Kunststoffkarte;
- einer Datenbankeinrichtung, die Daten in Abhängigkeit von der Identifikationsmarkierung enthält;
- einer Druckereinrichtung, die die aus der Datenbankeinrichtung ausgelesenen Daten und die Druckauftragsnummer auf den Kartenträger druckt;
- einer Einrichtung zum Erfassen der Druckauftragsnummer des Kartenträgers und zum Vergleichen der Druckauftragsnummer der Kunststoffkarte, die vor der Verbindung mit dem Kartenträger steht, mit der Druckauftragsnummer des Kartenträgers; und
- einer Zusammenführ- und Verbindungseinrichtung, die die Kunststoffkarte und den Kartenträger zusammenführt und verbindet, falls die Druckauftragsnummern der Kunststoffkarte und des Kartenträgers übereinstimmen.

Bevorzugte Weiterbildungen der vorliegenden Erfindung sind in den Unteransprüchen definiert.

Ein Vorteil der vorliegenden Erfindung liegt in der Verwendung der Druckauftragsnummer auf dem Kartenträger anstelle der Identifikationsnummer. Dies führt zu einer Verbesserung des Datenschutzes, da die Druckauftragsnummer im Gegensatz zur Identifikationsnummer nicht in eindeutiger Weise einem personenbezogenen Datensatz zugeordnet ist, sondern beispielsweise eine Zahl aus einer kleinen Gruppe von sich zyklisch wiederholenden Zahlen sein kann. Durch die Verwendung der Druckauftragsnummer erscheint die Identifikationsnummer, mittels der z.B. auf die Datenbank zur Abfrage von beispielsweise persönlichen Daten zugegriffen wird, nicht mehr auf dem Kartenträger und bleibt somit für Dritte unbekannt - auf der Kunststoffkarte ist diese Identifikationsnummer unsichtbar z.B. in einem Magnetstreifen oder ähnlichem enthalten. Der Zugriff auf persönliche Daten einer Person beispielsweise durch einen unerlaubten Zugriff auf die Datenbank durch Dritte kann gemäß der Erfindung also mit höherer Sicherheit unterbunden werden.

Nachfolgend werden unter Bezugnahme auf die beiliegenden Zeichnungen bevorzugte Ausführungsbeispiele der vorliegenden Erfindung näher beschrieben. Es zeigen:
- Fig. 1: eine allgemeine Darstellung einer Vorrichtung zum Zusammenführen und Verbinden von Kunststoffkarten und Kartenträgern gemäß der vorliegenden Erfindung, die zur Ausführung des erfindungsgemäßen Verfahrens geeignet ist;
- Fig. 2: ein erstes Ausführungsbeispiel der Vorrichtung zum Zusammenführen und Verbinden von Kunststoffkarten und Kartenträgern gemäß der vorliegenden Erfindung;
- Fig. 3: ein zweites Ausführungsbeispiel der Vorrichtung zum Zusammenführen und Verbinden von Kunststoffkarten und Kartenträgern gemäß der vorliegenden Erfindung;
- Fig. 4: ein drittes Ausführungsbeispiel der Vorrichtung zum Zusammenführen und Verbinden von Kunststoffkarten und Kartenträgern gemäß der vorliegenden Erfindung;
- Fig. 5: eine Vorrichtung nach dem Stand der Technik, die ein Verfahren nach dem Stand der Technik ausführt.

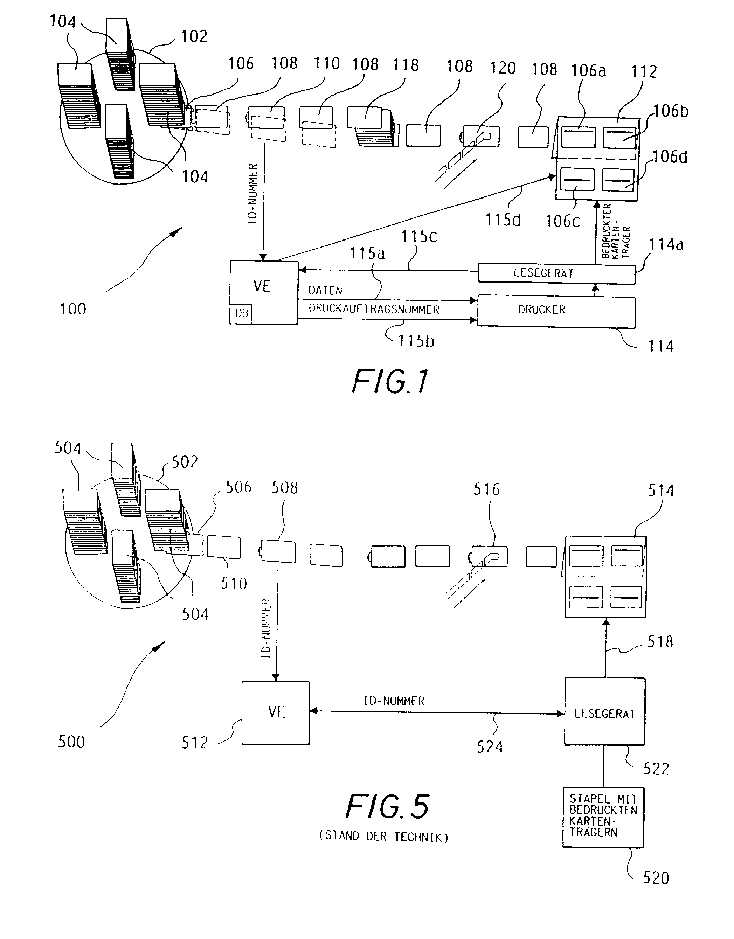

In Fig. 1 ist eine Vorrichtung zum Zusammenführen und Verbinden von Kunststoffkarten, die mit einer Identifikationsmarkierung versehen sind, und bedruckten Kartenträgern, die den jeweiligen Kunststoffkarten zugeordnet sind, gemäß der vorliegenden Erfindung dargestellt. Die erfindungsgemäße Vorrichtung ist in ihrer Gesamtheit mit dem Bezugszeichen 100 bezeichnet.

Die Vorrichtung 100 umfaßt eine Trägereinrichtung 102, die bei diesem Ausführungsbeispiel als Revolver ausgeführt ist. Der Revolver 102 enthält vier Magazine 104, die jeweils Kunststoffkarten 106 enthalten. Diese Karten sind bereits personalisiert, ihre Anordnung in den Magazinen 104 ist jedoch unsortiert (chaotisch). Über sogenannte Stoppstellen 108 gelangt eine Karte 106 zu einer Erfassungsstation 110.

Die Bewegung der Karten 106 in der Vorrichtung 100 erfolgt auf eine in Fachkreisen an sich bekannte Art und Weise.

Über die Stoppstellen 108 wird die Karte 106 zu einer Appliziereinrichtung 112 bewegt, die die Karte 106 mit einem Kartenträger zusammenführt und verbindet.

Die Erfassungsstation 110 ist mit einer Verarbeitungseinrichtung VE verbunden, der eine Datenbank DB zugeordnet ist.

Die Appliziereinrichtung 112 ist über eine Leseeinrichtung 114a mit einem Drucker 114 verbunden.

Der Drucker 114 ist mit der Verarbeitungseinrichtung VE durch eine Mehrzahl von Datenleitungen 115a, 115b verbunden.

Die Leseeinrichtung 114a ist mit der Verarbeitungseinrichtung VE durch eine Datenleitung 115c verbunden.

Nachfolgend wird anhand der Fig. 1 die Funktionsweise der erfindungsgemäßen Vorrichtung 100 näher beschrieben.

Die Trägereinrichtung 102 stellt aus einem ihrer Magazine eine Kunststoffkarte 106 bereit, die zu der Erfassungsstation 110 bewegt wird. Die Erfassungsstation erfaßt in Verbindung mit der Verarbeitungseinrichtung VE die Identifikationsnummer der Kunststoffkarte und ordnet dieser Kunststoffkarte eine sogenannte Druckauftragsnummer zu.

Die Verarbeitungseinrichtung VE liest mittels der Identifikationsmarkierung die Datenbank DB aus und überträgt die Daten über die Datenleitung 115a an den Drucker 114. Ferner überträgt die Verarbeitungseinrichtung VE über die Datenleitung 115b die Druckauftragsnummer an den Drucker.

Der Drucker 114 bedruckt einen Kartenträger mit den aus der Datenbank ausgelesenen Daten sowie mit der empfangenen Druckauftragsnummer.

Während der Drucker den Kartenträger bedruckt, bewegt sich die Kunststoffkarte 106 von der Erfassungsstation 110 in Richtung der Appliziereinrichtung 112. Bei Erreichen der letzten Stoppstelle 108 vor der Appliziereinrichtung 112 wird der bedruckte Kartenträger aus dem Drucker an die Leseeinrichtung 114a übergeben. Die Leseeinrichtung 114a liest die auf dem Kartenträger aufgedruckte Druckauftragsnummer und übergibt diese über die Datenleitung 115c an die Verarbeitungseinrichtung VE, welche bestimmt, ob die Druckauftragsnummer des Kartenträgers mit der Druckauftragsnummer der Kunststoffkarte 106 übereinstimmt, die sich an der Stoppstelle 108 unmittelbar vor der Appliziereinrichtung 112 befindet. Stimmen die beiden Druckauftragsnummern überein, so gibt die Verarbeitungseinrichtung VE über eine Datenleitung 115d ein Signal aus, das bewirkt, daß die Appliziereinrichtung 112 die Kunststoffkarte 106 und den Kartenträger zusammenführt und verbindet.

Es sei darauf hingewiesen, daß bei der erfindungsgemäßen Vorrichtung 100 bis auf den Drucker alle übrigen Komponenten dem Systemtakt unterworfen sind. Aus diesem Grund ist eine erneute Erfassung der Druckauftragsnummer der Kunststoffkarte an der Stoppstelle 108 unmittelbar vor der Appliziereinrichtung 112 nicht notwendig, da der Verarbeitungseinrichtung VE die Dauer, d.h. die Anzahl der Takte, bekannt ist, die eine Karte 106 benötigt, um von der Erfassungsstation 110 zu der Appliziereinrichtung 112 zu laufen.

Um die Zusammenführung der Karten und der Kartenträger mit dem Gesamtsystem zu synchronisieren, wird die Druckauftragsnummer verwendet, wie dies oben beschrieben wurde.

Es sei ferner darauf hingewiesen, daß es sich bei der Druckauftragsnummer um eine sich zyklisch wiederholende Nummer handelt, deren Wiederholungsrate beispielsweise abhängig von der Anzahl der Karten, die nach der Erfassung der Identifikationsmarkierung einer Karte und vor deren Verbindung mit dem Kartenträger die Erfassungsstation 110 noch durchlaufen.

Die spezielle Konfiguration der Vorrichtung hängt entscheidend von der Art des verwendeten Druckers ab. Um keine Zeitverluste durch den Weg der Kartenträger vom Druckwerk des Druckers 114 bis zur Appliziereinrichtung 112 zu erleiden, wird mindestens eine Anzahl gelesener Karten, entsprechend der Anzahl der Kartenträger zwischen der Erfassungsstation 110 und der Appliziereinrichtung 112, zwischengespeichert. Der Zwischenpuffer 118 kann beispielsweise ausgebildet sein, um 20 bis 80, vorzugsweise etwa 50 Kunststoffkarten aufzunehmen. Bei der Verwendung eines solchen Zwischenpuffers 118 richtet sich die Anzahl der Druckauftragsnummern zweckmäßigerweise nach der Anzahl der im Zwischenpuffer 118 enthaltenen Kunststoffkarten. Bei dem oben beschriebenen Beispiel wäre die maximale Druckauftragsnummer folglich 50. Der nächsten nachfolgenden Druckauftragsnummer würde folglich die Nummer 1 zugeordnet werden.

Bei dem in Fig. 1 dargestellten Ausführungsbeispiel ist ferner ein Etikettierer 120 vorgesehen, der die Kunststoffkarte 106 vor dem Erreichen der Appliziereinrichtung 112 mit einem Klebeetikett versieht, so daß diese sicher auf dem Kartenträger befestigbar ist.

Obwohl im vorangegangenen lediglich das Zusammenführen und Verbinden von einer Kunststoffkarte 106 mit einem Kartenträger beschrieben wurde, ist es offensichtlich, daß die vorliegende Erfindung nicht auf das Befestigen von nur einer Kunststoffkarte auf einem Kartenträger beschränkt ist.

In Fig. 1 ist eine Appliziereinrichtung 112 dargestellt, die es ermöglicht, wahlweise bis zu vier Kunststoffkarten 106a-d mit einem einzigen Kartenträger zusammenzuführen und zu verbinden.

In diesem Fall werden den Kunststoffkarten 106, die mit dem einen Kartenträger zusammenzuführen und zu verbinden sind, jeweils die gleiche Druckauftragsnummer zugeordnet.

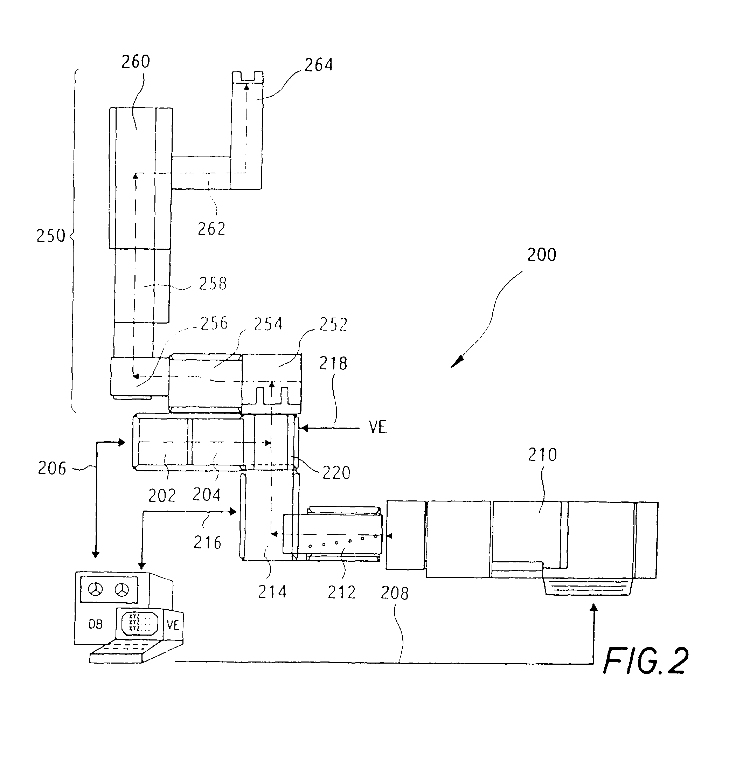

Anhand der Figuren 2 bis 5 werden nachfolgend bevorzugte Ausführungsbeispiele von Systemen beschrieben, die Kunststoffkarten, die mit einer Identifikationsmarkierung versehen sind, und bedruckte Kartenträger, die den jeweiligen Kunststoffkarten zugeordnet sind, Zusammenführen und Verbinden und die die applizierten Kartenträger mit Kunststoffkarte verpacken.

In den Fig. 2 bis 4 sind jeweils gleiche Komponenten mit gleichen Bezugszeichen versehen.

Fig. 2 zeigt ein System 200, das einen Kartenturm 202 aufweist, der die Kunststoffkarten enthält. An den Kartenturm 202 schließt sich eine Leseeinrichtung 204 an, die einen Zwischenpuffer einschließt. Über eine Datenleitung 206 erfaßt eine Verarbeitungseinrichtung VE die Identifikationsmarkierung der Kunststoffkarte, die durch die Leseeinrichtung 204 gelesen wurde. Die Verarbeitungseinrichtung VE umfaßt eine Datenbank DB, aus der abhängig von der erfaßten Identifikationsmarkierung Daten auslesbar sind. Die Verarbeitungseinrichtung VE ordnet der Kunststoffkarte ferner eine Druckauftragsnummer zu.

Über eine weitere Datenleitung 208 ist die Verarbeitungseinrichtung VE mit einem Einzelblattdrucker 210 verbunden.

Der Einzelblattdrucker 210 empfängt über die Datenleitung 208 sowohl die aus der Datenbank DB ausgelesenen Daten als auch die der Kunststoffkarte zugeordnete Druckauftragsnummer. Der Einzelblattdrucker 210 bedruckt den Kartenträger mit den durch die Verarbeitungseinrichtung VE empfangenen Daten sowie mit der Druckauftragsnummer.

Die einzelnen Blätter, die von dem Einzelblattdrucker 210 bedruckt wurden, werden von einer Transfereinrichtung 212 empfangen, die die einzelnen Blätter an einen Papierpuffer 214 weitergibt.

Der Papierpuffer weist einen Einzelblatteinzug und eine Einzelblattausgabe auf. Am Ausgang des Papierpuffers schließt dieser eine Leseeinrichtung (nicht dargestellt) ein, die über eine Datenleitung 216 mit der Verarbeitungseinrichtung VE verbunden ist. Die Leseeinrichtung erfaßt die Druckauftragsnummer des Kartenträgers und übergibt diese über die Datenleitung 216 an die Verarbeitungseinrichtung VE.

Die Verarbeitungseinrichtung VE bestimmt, ob die übergebene Druckauftragsnummer des Kartenträgers mit derjenigen der Kunststoffkarte übereinstimmt, die vor der Verbindung mit diesem Kartenträger steht.

Die Verarbeitungseinrichtung VE ist über eine Datenleitung 218 mit einer Appliziereinrichtung 220 verbunden. Bestimmt die Verarbeitungseinrichtung VE, daß die Druckauftragsnummern der Kunststoffkarte und des Kartenträgers übereinstimmen, so gibt sie über die Leitung 218 ein Signal an die Appliziereinrichtung, die die Kunststoffkarte aus der Einrichtung 204 mit dem Kartenträger aus der Einrichtung 214 zusammenführt und verbindet. Anschließend gibt die Appliziereinrichtung den Kartenträger mit Kunststoffkarte an eine Verpackungseinrichtung aus, die in ihrer Gesamtheit mit dem Bezugszeichen 250 versehen ist.

Die Verpackungseinrichtung 250 umfaßt eine Umlenkeinrichtung 252, die den Kartenträger mit Kunststoffkarte, der von der Appliziereinrichtung 220 ausgegeben wurde, empfängt. Die Einrichtung 252 übergibt den Kartenträger mit Kunststoffkarte an eine Längsfalzeinrichtung, die diesen ihrerseits einer Sammelstation 256 zuführt.

Über eine Zusammentragbahn 258 gelangt der Kartenträger mit Kunststoffkarte zu einer Verpackungs- und Verschließeinrichtung 260. Aus dieser wird er mittels einer Ausfahreinrichtung 262 entfernt und in einem Schuppenband 264 geschuppt abgelegt.

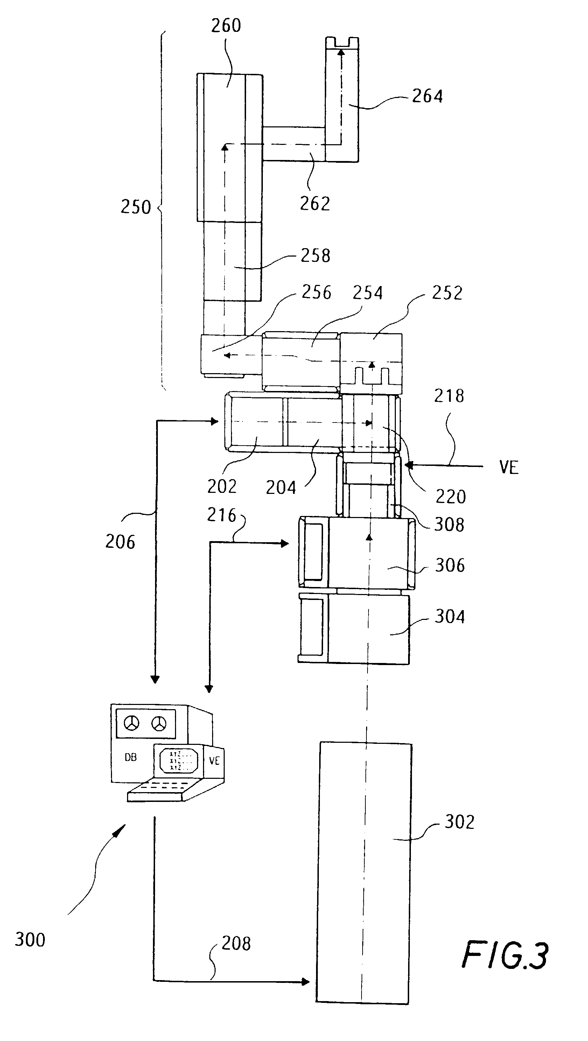

In Fig. 3 ist eine weiteres Ausführungsbeispiel eines Systems 300 zum Zusammenführen und Verbinden von Kunststoffkarten, die mit einer Identifikationsnummer versehen sind, und bedruckten Kartenträgern, die den jeweiligen Kunststoffkarten zugeordnet sind, und zum Verpacken der applizierten Kartenträger mit Kunststoffkarte dargestellt. Dieses System ist in seiner Gesamtheit mit dem Bezugszeichen 300 versehen.

Komponenten, die den in Fig. 2 dargestellten Komponenten entsprechen, sind mit dem gleichen Bezugszeichen versehen. Eine erneute Beschreibung dieser Komponenten erfolgt nicht.

Ein Unterschied dieses Systems 300 gegenüber dem System aus Fig. 2 besteht darin, daß anstelle eines Einzelblattdruckers ein Endlospapierdrucker 302 verwendet wird.

Beabstandet von dem Endlospapierdrucker 302 ist ein Schlaufenpuffer 304 angeordnet, der das Endlospapier schlaufenartig zwischenpuffert. Zwischen dem Schlaufenpuffer und dem Endlospapierdrucker 302 bildet sich eine Papierschlaufe.

Dem Schlaufenpuffer 304 ist eine Schneidemaschine 306 nachgeordnet, die das Endlospapier vereinzelt. Der Schneidemaschine ist ebenfalls eine Leseeinrichtung zugeordnet, die über die Datenleitung 216 mit der Verarbeitungseinrichtung VE in Verbindung steht. Dies wurde bereits anhand von Fig. 2 beschrieben.

Zwischen der Schneideeinrichtung 306 und der Appliziereinrichtung 220 ist eine Querfalzeinrichtung 308 angeordnet, die das vereinzelte Papier aus der Schneidemaschine 306 empfängt, dieses mit einem Querfalz versieht, und an die Appliziereinrichtung 220 ausgibt.

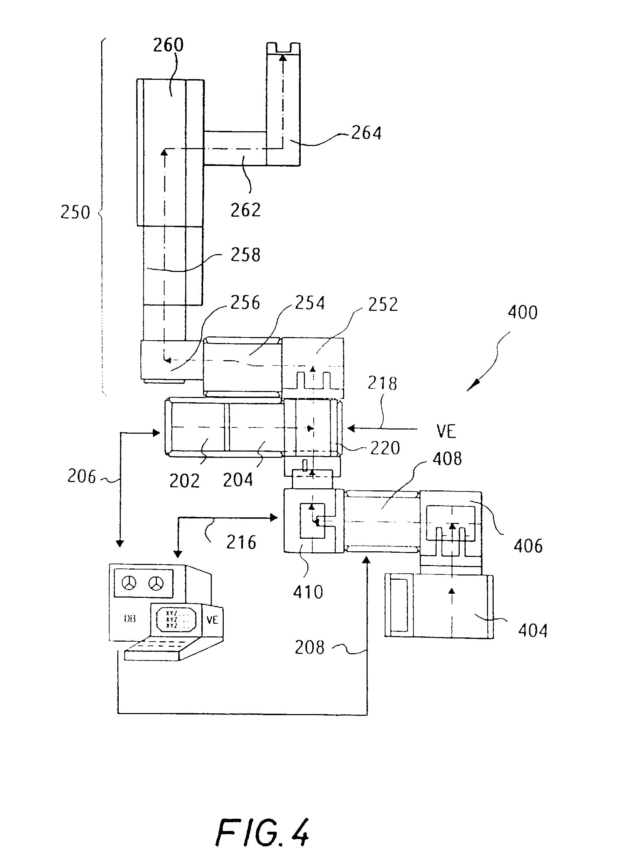

In Fig. 4 ist wiederum ein weiteres Ausführungsbeispiel eines Systems zum Zusammenführen und Verbinden von Kunststoffkarten, die mit einer Identifikationsmarkierung versehen sind, und bedruckten Kartenträgern, die den jeweiligen Kunststoffkarten zugeordnet sind, und zum Verpacken der applizierten Kartenträger mit Kunststoffkarte dargestellt.

Das System ist in seiner Gesamtheit mit dem Bezugszeichen 400 bezeichnet und Komponenten, die denjenigen entsprechen, die anhand von Fig. 2 beschrieben wurden, sind mit gleichen Bezugszeichen versehen. Eine erneute Beschreibung dieser Komponenten erfolgt nicht.

Das System 400 unterscheidet sich von den vorhergehenden Systemen 200, 300 dahingehend, daß kein Zwischenpuffer vorgesehen ist, sondern lediglich eine Leseeinrichtung 204, die am Eingang der Appliziereinrichtung 220 plaziert ist. Nachfolgend wird beschrieben, aus welchen Gründen bei diesem Ausführungsbeispiel auf den Zwischenpuffer verzichtet werden kann.

Das System 400 umfaßt eine Beschickungsvorrichtung 404, die bereits vorgedruckte, nicht personalisierte Papierbögen enthält. Das heißt, daß auf diesen Papierbögen bereits beispielsweise vorgefertigte Brieftexte etc. aufgedruckt sind, so daß lediglich die persönlichen Angaben noch einzutragen sind. Die Beschickungseinrichtung 404 beschickt über eine erste Umlenkeinrichtung 406 einen Tintenstrahldrucker 408. Der Tintenstrahldrucker 408 fügt in die vorgedruckten Papiere die notwendigen Daten ein, z.B. Name, Adresse etc., und die Druckauftragsnummer, die er auf die bereits beschriebene Art und Weise über die Datenleitung 208 von der Verarbeitungseinrichtung VE erhält.

Über eine zweite Umlenkeinrichtung 410 ist der Kartenträger der Appliziereinrichtung 220 zuführbar.

Die zweite Umlenkeinrichtung 410 kann ebenfalls eine Leseeinrichtung (nicht dargestellt) umfassen, die auf die bereits beschriebene Art und Weise die Druckauftragsnummer erfaßt.

Der Grund dafür, daß bei diesem Ausführungsbeispiel kein Zwischenpuffer verwendet werden muß, liegt darin, daß der Drucker lediglich die Druckauftragsnummer sowie Namen, Adresse etc. auf den Kartenträger aufdrucken muß, der bereits in der Anlage ist. Die Anzahl der Kartenträger in der Anlage übersteigt nicht die Anzahl der Kunststoffkarten nach der Erfassungsstation und vor der Appliziereinrichtung. Daher ist eine Zwischenpufferung der Kunststoffkarten nicht notwendig.

In Abweichung von dem oben beschriebenen Ausführungsbeispiel kann die Leseeinrichtung auch am Ausgang des Tintenstrahldruckers vorgesehen sein.

## Patentansprüche

1. Verfahren zum Zusammenführen und Verbinden von Kunststoffkarten, die mit einer Identifikationsmarkierung versehen sind, und bedruckten Kartenträgern, die den jeweiligen Kunststoffkarten zugeordnet sind, mit den Schritten:
a) Bereitstellen der Kunststoffkarte (106);
b) Erfassen der Identifikationsmarkierung der Kunststoffkarte (106);
gekennzeichnet durch folgende Schritte:
c) Zuordnen einer Druckauftragsnummer zu der Kunststoffkarte (106);
d) Auslesen einer Datenbank (DB) mittels der Identifikationsmarkierung;
e) Bedrucken des Kartenträgers mit aus der Datenbank (DB) ausgelesenen Daten sowie mit der Druckauftragsnummer;
f) Erfassen der Druckauftragsnummer des Kartenträgers vor dem Verbinden des Kartenträgers mit der Kunststoffkarte (106);
g) Bestimmen, ob die Druckauftragsnummer der Kunststoffkarte (106), die vor dem Verbinden mit dem Kartenträger steht, mit der im Schritt f) erfaßten Druckauftragsnummer übereinstimmt; und
h) falls die Druckauftragsnummer der Kunststoffkarte (106) und des Kartenträgers übereinstimmen, Zusammenführen und Verbinden der Kunststoffkarte (106) und des Kartenträgers.

2. Verfahren nach Anspruch 1, dadurch gekennzeichnet,
daß die Druckauftragsnummer eine sich zyklisch wiederholende Nummer ist.

3. Verfahren nach Anspruch 1 oder 2, gekennzeichnet durch folgenden Schritt nach dem Schritt b)
- Zwischenpuffern der Kunststoffkarten.

4. Verfahren nach Anspruch 3, dadurch gekennzeichnet,
daß 20 bis 80, vorzugsweise etwa 50 Kunststoffkarten zwischengepuffert werden.

5. Verfahren nach Anspruch 3 oder 4, dadurch gekennzeichnet,
daß die Anzahl der Druckauftragsnummern mindestens der maximalen Anzahl der zwischengepufferten Kunststoffkarten entspricht.

6. Verfahren nach einem der Ansprüche 1 bis 5, gekennzeichnet durch folgenden Schritt vor dem Schritt h)
- Aufbringen eines Klebeetiketts auf der Kunststoffkarte (106).

7. Verfahren nach einem der Ansprüche 1 bis 6, dadurch gekennzeichnet,
daß eine Mehrzahl von Kunststoffkarten mit einem Kartenträger zusammengeführt und verbunden werden, wobei jeder der Mehrzahl der Kunststoffkarten die gleiche Druckauftragsnummer zugeordnet ist.

8. Vorrichtung zum Zusammenführen und Verbinden von Kunststoffkarten, die mit einer Identifikationsmarkierung versehen sind, und bedruckten Kartenträgern, die den jeweiligen Kunststoffkarten zugeordnet sind, gekennzeichnet durch
- eine Trägereinrichtung (102), in der die Kunststoffkarten (106) enthalten sind;
- eine Einrichtung (110, VE) zum Erfassen der Identifikationsmarkierung der Kunststoffkarte (106) und zum Zuordnen einer Druckauftragsnummer zu der Kunststoffkarte (106);
- eine Datenbankeinrichtung (DB), die Daten in Abhängigkeit von der Identifikationsmarkierung enthält;
- eine Druckereinrichtung (114), die die aus der Datenbankeinrichtung (DB) ausgelesenen Daten und die Druckauftragsnummer auf den Kartenträger druckt;
- einer Einrichtung (114a, VE) zum Erfassen der Druckauftragsnummer des Kartenträgers und zum Vergleichen der Druckauftragsnummer der Kunststoffkarte (106), die vor der Verbindung mit dem Kartenträger steht, mit der Druckauftragsnummer des Kartenträgers; und
- eine Zusammenführ- und Verbindungseinrichtung (112), die die Kunststoffkarte (106) und den Kartenträger zusammenführt und verbindet, falls die Druckauftragsnummern der Kunststoffkarte (106) und des Kartenträgers übereinstimmen.

9. Vorrichtung nach Anspruch 8, dadurch gekennzeichnet,
daß die Druckauftragsnummer eine sich zyklisch wiederholende Nummer ist.

10. Vorrichtung nach Anspruch 8 oder 9, gekennzeichnet durch
eine Zwischenpuffereinrichtung (118), die angeordnet ist, um die Kunststoffkarten zwischenzupuffern.

11. Vorrichtung nach Anspruch 10, dadurch gekennzeichnet,
daß die Zwischenpuffereinrichtung (118) 20 bis 80, vorzugsweise etwa 50 Kunststoffkarten aufnimmt.

12. Vorrichtung nach Anspruch 10 oder 11, dadurch gekennzeichnet,
daß die Druckauftragsnummer der Anzahl der in der Zwischenpuffereinrichtung (118) enthaltenen Kunststoffkarten entspricht.

13. Vorrichtung nach einem der Ansprüche 8 bis 12, gekennzeichnet durch
eine Einrichtung (120), die ein Klebeetikett auf der Kunststoffkarte (106) aufbringt.

14. Vorrichtung nach einem der Ansprüche 8 bis 13, dadurch gekennzeichnet,
daß die Zusammenführ- und Verbindungseinrichtung (112) eine Mehrzahl von Kunststoffkarten mit einem Kartenträger zusammenführt und verbindet, wobei jeder der Mehrzahl von Kunststoffkarten die gleiche Druckauftragsnummer zugeordnet ist.

15. Vorrichtung gemäß Anspruch 8, ferner zum Verpacken der applizierten Kartenträger mit Kunststoffkarte, dadurch gekennzeichnet,
- daß die Trägereinrichtung ein Kartenturm (202) ist, der die Kunststoffkarten enthält;
- daß die Vorrichtung einen Zwischenpuffer (204) zur Zwischenpufferung der aus dem Kartenturm (202) erhaltenen Kunststoffkarten aufweist;
- daß die Einrichtung, die die Identifikationsmarkierung der Kunststoffkarte erfaßt und der Kunststoffkarte eine Druckauftragsnummer zuordnet, eine Verarbeitungseinrichtung (VE) ist;
- daß aus der Datenbank (DB) Daten abhängig von der Identifikationsmarkierung auslesbar sind;
- daß die Druckereinrichtung ein Einzelblattdrucker (210) ist, der mit der Verarbeitungseinrichtung (VE) verbunden ist, und den Kartenträger aufgrund der von der Verarbeitungseinrichtung (VE) empfangenen Daten bedruckt und den Kartenträger mit der Druckauftragsnummer versieht;
- daß die Vorrichtung eine Transfereinrichtung (212), die den von dem Einzelblattdrucker (210) ausgegebenen Kartenträger empfängt, und einen Papierpuffer (214) mit Einzelblatteinzug, Querfalzeinrichtung und Einzelblattausgabe, der von der Transfereinrichtung (212) den Kartenträger empfängt, aufweist;
- daß die Einrichtung zum Erfassen und Vergleichen der Druckauftragsnummer des Kartenträgers eine Leseeinrichtung ist, die die Druckauftragsnummer des Kartenträgers erfaßt und an die Verarbeitungseinrichtung (VE) übergibt, und die bestimmt, ob die übergebene Druckauftragsnummer des Kartenträgers mit derjenigen der Kunststoffkarte übereinstimmt, die vor der Verbindung mit dem Kartenträger steht;
- daß die Zusammenführ- und Verbindungs-Einrichtung eine Appliziereinrichtung (220) ist, die mit der Verarbeitungseinrichtung (VE) verbunden ist, die die Kunststoffkarte aus dem Zwischenpuffer (204) mit dem Kartenträger zusammenführt und verbindet, und den Kartenträger mit Kunststoffkarte ausgibt, wenn die Druckauftragsnummern der Kunststoffkarte und des Kartenträgers übereinstimmen; und
- daß die Vorrichtung eine Vorrichtung (250) zum Verpacken des applizierten Kartenträgers mit Kunststoffkarte aufweist.

16. Vorrichtung gemäß Anspruch 8, ferner zum Verpacken der applizierten Kartenträger mit Kunststoffkarte, dadurch gekennzeichnet,
- daß die Trägereinrichtung ein Kartenturm (202) ist, der die Kunststoffkarten enthält;
- daß die Vorrichtung einen Zwischenpuffer (204) zur Zwischenpufferung der aus dem Kartenturm (202) erhaltenen Kunststoffkarten aufweist;
- daß die Einrichtung, die die Identifikationsmarkierung der Kunststoffkarte erfaßt und der Kunststoffkarte eine Druckauftragsnummer zuordnet, eine Verarbeitungseinrichtung (VE) ist;
- daß aus der Datenbank (DB) Daten abhängig von der Identifikationsmarkierung auslesbar sind;
- daß die Druckereinrichtung ein Endlospapierdrucker (302) ist, der mit der Verarbeitungseinrichtung (VE) verbunden ist und den Kartenträger aufgrund der von der Verarbeitungseinrichtung (VE) empfangenen Daten bedruckt und den Kartenträger mit der Druckauftragsnummer versieht;
- daß die Vorrichtung einen beabstandet zum Endlospapierdrucker (302) angeordneten Schlaufenpuffer (304) und eine Schneidemaschine (306), die das Endlospapier vereinzelt, aufweist;
- daß die Einrichtung zum Erfassen und Vergleichen der Druckauftragsnummer des Kartenträgers eine Leseeinrichtung ist, die die Druckauftragsnummer des Kartenträgers erfaßt und an die Verarbeitungseinrichtung (VE) übergibt, und die bestimmt, ob die übergebene Druckauftragsnummer des Kartenträgers mit derjenigen der Kunststoffkarte übereinstimmt, die vor der Verbindung mit dem Kartenträger steht;
- daß die Vorrichtung eine Querfalzeinrichtung (308), die das vereinzelte Papier empfängt, aufweist;
- daß die Zusammenführ- und Verbindungs-Einrichtung eine Appliziereinrichtung (220) ist, die mit der Verarbeitungseinrichtung (VE) verbunden ist, die die Kunststoffkarte aus dem Zwischenpuffer (204) mit dem Kartenträger zusammenführt und verbindet, und den Kartenträger mit Kunststoffkarte ausgibt, wenn die Druckauftragsnummern der Kunststoffkarte und des Kartenträgers übereinstimmen; und
- daß die Vorrichtung eine Vorrichtung (250) zum Verpacken des applizierten Kartenträgers mit Kunststoffkarte aufweist.

17. Vorrichtung gemäß Anspruch 8, ferner zum Verpacken der applizierten Kartenträger mit Kunststoffkarte, dadurch gekennzeichnet,
- daß die Trägereinrichtung ein Kartenturm (202) ist, der die Kunststoffkarten enthält;
- daß die Einrichtung, die die Identifikationsmarkierung der Kunststoffkarte erfaßt und der Kunststoffkarte eine Druckauftragsnummer zuordnet, eine Verarbeitungseinrichtung (VE) ist;
- daß aus der Datenbank (DB) Daten abhängig von der Identifikationsmarkierung auslesbar sind;
- daß die Vorrichtung eine Beschickungseinrichtung (404), die bereits vorbedruckte, nicht personalisierte Papiere enthält, und eine erste Umlenkeinrichtung (406), die durch die Beschickungseinrichtung (404) beschickt wird, aufweist;
- daß die Druckereinrichtung eine Tintenstrahldruckereinheit (408) ist, die das vorgedruckte, nicht personalisierte Papier von der ersten Umlenkeinrichtung (406) empfängt, und den Kartenträger aufgrund der von der Verarbeitungseinrichtung (VE) empfangenen Daten bedruckt und den Kartenträger mit der Druckauftragsnummer versieht;
- daß die Vorrichtung eine zweite Umlenkeinrichtung (410), die die bedruckten Kartenträger empfängt, und eine Querfalzeinrichtung aufweist;
- daß die Einrichtung zum Erfassen und Vergleichen der Druckauftragsnummer des Kartenträgers eine Leseeinrichtung ist, die die Druckauftragsnummer des Kartenträgers erfaßt und an die Verarbeitungseinrichtung (VE) übergibt, und die bestimmt, ob die übergebene Druckauftragsnummer des Kartenträgers mit derjenigen der Kunststoffkarte übereinstimmt, die vor der Verbindung mit dem Kartenträger steht;
- daß die Zusammenführ- und Verbindungs-Einrichtung eine Appliziereinrichtung (220) ist, die mit der Verarbeitungseinrichtung (VE) verbunden ist, die die Kunststoffkarte mit dem Kartenträger zusammenführt und verbindet, und die den Kartenträger mit Kunststoffkarte ausgibt, wenn die Druckauftragsnummern der Kunststoffkarte und des Kartenträgers übereinstimmen; und
- daß die Vorrichtung eine Vorrichtung (250) zum Verpacken des applizierten Kartenträgers mit Kunststoffkarte aufweist.

18. Vorrichtung nach einem der Ansprüche 15 bis 17, dadurch gekennzeichnet,
daß die Vorrichtung (250) zum Verpacken des applizierten Kartenträgers mit Kunststoffkarte folgende Merkmale aufweist:
- eine Umlenkeinrichtung (252);
- eine Längsfalzeinrichtung (254);
- eine Sammelstation (256);
- eine Zusammentragbahn (258);
- eine Verpackungs- und Verschließeinrichtung (260);
- eine Ausfahreinrichtung (262); und
- ein Schuppenband (264).

## Claims

1. A method of bringing together and joining plastic cards, which are provided with an identification mark, and printed card carriers associated with the respective plastic cards, comprising the steps of:
a) providing the plastic card (106);
b) detecting the identification mark of said plastic card (106);
characterized by the following steps:
c) associating a print job number with said plastic card (106);
d) reading a data base (DB) by means of said identification mark;
e) printing on the card carrier data read from the data base (DB) as well as the print job number;
f) detecting the print job number of the card carrier prior to joining said card carrier to the plastic card (106);
g) determining whether the print job number of the plastic card (106), which is about to be joined to the card carrier, corresponds to the print job number detected in step f); and,
h) provided that the print job number of the plastic card (106) and that of the card carrier correspond, bringing together and joining the plastic card (106) and the card carrier.

2. A method according to claim 1, characterized in
that the print job number is a cyclically recurring number.

3. A method according to claim 1 or 2, characterized by the following step after step b):
- storing the plastic cards temporarily.

4. A method according to claim 3, characterized in that,
20 to 80, preferably about 50 plastic cards are stored temporarily.

5. A method according to claim 3 or 4, characterized in
that the number of print job numbers corresponds at least to the maximum number of temporarily stored plastic cards.

6. A method according to claims 1 to 5, characterized by the following step carried out prior to step h):
- applying a gummed label to the plastic card (106).

7. A method according to one of the claims 1 to 6, characterized in
that a plurality of plastic cards is brought together with and joined to a card carrier, each of said plurality of plastic cards having associated therewith the same print job number.

8. An apparatus for bringing together and joining plastic cards, which are provided with an identification mark, and printed on card carriers associated with the respective plastic cards, chararcterized by
- a carrier means (102) containing the plastic cards (106);
- means (110, VE) for detecting the identification mark of the plastic card (106) and for associating a print job number with said plastic card (106);
- a data base means (DB) containing data depending on the identification mark;
- a printer means (114) which prints onto the card carrier the data read from said data base means as well as the print job number;
- a means (114a, VE) used for detecting the print job number of the card carrier and for comparing the print job number of the plastic card (106), which is about to be joined to the card carrier, with the print job number of the card carrier; and
- a bringing-together and joining means (112) for bringing together and joining the plastic card (106) and the card carrier, provided that the print job numbers of the plastic card (106) and of the card carrier correspond.

9. An apparatus according to claim 8, characterized in
that the print job number is a cylically recurring number.

10. An apparatus according to claim 8 or 9 further characterized by:
a temporary store means (118) which is arranged for temporarily storing the plastic cards.

11. An apparatus according to claim 10, characterized in
that the temporary store means (118) receives therein 20 to 80, preferably about 50 plastic cards.

12. An apparatus according to claim 10 or 11, characterized in
that the print job number corresponds to the number of plastic cards contained in the temporary store means (118).

13. An apparatus according to one of the claims 8 to 12, characterized by
a means (120) which applies a gummed label to the plastic card (106).

14. An apparatus according to one of the claims 8 to 13, characterized in
that the bringing-together and joining means (112) brings together and joins a plurality of plastic cards to one card carrier, each of said plurality of plastic cards having associated therewith the same print job number.

15. An apparatus according to claim 8, further for packaging the plastic cards having applied thereto the card carriers, characterized in
- that the carrier means is a tower of cards (202) comprising the plastic cards;
- that the apparatus comprises a temporary store (204) for temporarily storing the plastic cards received from said tower of cards (202);
- that the means which detects the identification mark of the plastic card and which associates a print job number with said plastic card is a processing means (VE);
- that data can be read from the data base (DB) depending on said identification mark;
- that the printer means is a single-sheet printer (210) connected to the processing means (VE), said single-sheet printer printing on the card carrier on the basis of the data received from the processing means (VE) and providing said card carrier with the print job number;
- that the apparatus comprises a transfer means (212) receiving the card carrier discharged from said single-sheet printer (210), and a paper store (214) provided with a single-sheet feed means, a transverse folding means, and a single-sheet discharge means, and receiving the card carrier from the transfer means (212);
- that the means for detecting and comparing of the print job number is a reader which detects the print job number of the card carrier and transfers it to the processing means and which determines whether the transmitted print job number of the card carrier corresponds to that of the plastic card which is about to be joined to the card carrier;
- that the bringing-together and joining means is an application means (220) which is connected to the processing means (VE) and which is used for bringing together and joining the plastic card, which comes from the temporary store (204), and the card carrier, said application means (220) discharging the card carrier plus plastic card, if the print job numbers of said plastic card and of said card carrier correspond; and
- that the apparatus comprises a device for packaging the plastic card having applied thereto the card carrier.

16. An apparatus according to claim 8, further for packaging the plastic cards having applied thereto the card carriers, characterized in
- that the carrier means is a tower of cards (202) comprising the plastic cards;
- that the apparatus comprises a temporary store (204) for temporarily storing the plastic cards received from said tower of cards (202);
- that the means which detects the identification mark of the plastic card and which associates a print job number with said plastic card is a processing means (VE);
- that data can be read from the data base (DB) depending on said identification mark;
- that the printer means is a continuous-paper printer (302) connected to the processing means (VE), said continuous-paper printer (302) printing on the card carrier on the basis of the data received from the processing means (VE) and providing said card carrier with the print job number;
- that the apparatus comprises a loop-type store (304) and a cutting machine (306) for separating the continuous paper, which are arranged in spaced relationship with the continuous-paper printer (302);
- that the means for detecting and comparing of the print job number is a reader which detects the print job number of the card carrier and transmits said number to the processing means (VE), and which determines whether the transmitted print job number of the card carrier corresponds to that of the plastic card, which is about to be joined to the card carrier;
- that the apparatus comprises a transverse folding means (308) which receives the separated paper;
- that the bringing-together and joining means is an application means (220) which is connected to the processing means (VE) and which is used for bringing together and joining the plastic card, which comes from the temporary store (204), and the card carrier, said application means (220) discharging the card carrier plus plastic card, if the print job numbers of said plastic card and of said card carrier correspond; and
- that the apparatus comprises a device (250) for packaging the plastic card having applied thereto the card carrier.

17. An apparatus according to claim 8, further for packaging the plastic cards having applied thereto the card carriers, characterized in
- that the carrier means is a tower of cards (202) comprising the plastic cards;
- that the means which detects the identification mark of the plastic card and which associates a print job number with said plastic card is a processing means (VE);
- that data can be read from the data base (DB) depending on said identification mark;
- that the apparatus comprises a feed device (404) containing non-personalized paper sheets which have already been preprinted, and a first rerouting means (406) fed by said feed device (404);
- that the printer means is an ink-jet printing unit (408) which receives the preprinted, non-personalized paper sheets from said first rerouting means (406) and which prints on the card carrier on the basis of the data received from the processing means (VE) and provides said card carrier with the print job number;
- that the apparatus comprises a second rerouting means (410) receiving the printed on card carriers, and a transverse folding means;
- that the means for detecting and comparing of the print job number is a reader which detects the print job number of the card carrier and transmits said number to the processing means (VE), and which determines whether the transmitted print job number of the card carrier corresponds to that of the plastic card which is about to be joined to the card carrier;
- that the bringing-together and joining means is an application means (220) which is connected to the processing means (VE) and which is used for bringing together and joining the plastic card and the card carrier, said application means (220) discharging the card carrier plus plastic card, if the print job numbers of said plastic card and of said card carrier correspond; and
- that the apparatus comprises a device (250) for packaging the plastic card having applied thereto the card carrier.

18. An apparatus according to one of the claims 15 to 17, characterized in
that the device (250) for packaging the plastic card having applied thereto the card carrier comprises:
- a rerouting means (252);
- a longitudinal folding means (254);
- a collector station (254);
- a collecting path (258);
- a packaging and closing means (260);
- a removal means (262); and
- a scaled band (264).

## Revendications

1. Procédé de réunion et d'assemblage de cartes en matière plastique, qui sont pourvues d'une marque d'identification, et de supports imprimés de cartes, qui sont associés aux cartes respectives en matière plastique, comprenant les étapes consistant à:
a) préparer la carte en matière plastique (106);
b) détecter la marque d'identification de la carte en matière plastique (106);
caractérisé par les étapes consistant à:
c) associer à la carte en matière plastique (106) un numéro de tâche d'impression;
d) lire une base de données (DB) au moyen de la marque d'identification;
e) imprimer sur le support de carte les données lues dans la base de données (DB) ainsi que le numéro de tâche d'impression;
f) détecter le numéro de tâche d'impression du support de carte avant d'assembler le support de carte et la carte en matière plastique (106);
g) déterminer si le numéro de tâche d'impression de la carte en matière plastique (106), qui est présent avant l'assemblage avec le support de carte, coïncide avec le numéro de tâche d'impression détecté à l'étape f); et
h) dans le cas où les numéros de tâches d'impression de la carte en matière plastique (106) et du support de carte coïncident, réunir et assembler la carte en matière plastique (106) et le support de carte.

2. Procédé selon la revendication 1, caractérisé en ce que
le numéro de tâche d'impression est un numéro qui se répète de façon cyclique.

3. Procédé selon la revendication 1 ou 2 caractérisé par l'étape suivante qui suit l'étape b)
■ entrer en magasin de tampon les cartes en matière plastique.

4. Procédé selon la revendication 3, caractérisé en ce que
■ 20 à 80, de préférence environ 50 cartes en matière plastique sont entrées en magasin de tampon.

5. Procédé selon la revendication 3 ou 4, caractérisé en ce que
le nombre des numéros de tâches d'impression correspond au moins au nombre maximal des cartes en matière plastique entrées en tampon.

6. Procédé selon l'une des revendications 1 à 5, caractérisé par l'étape suivante, avant l'étape h)
■ disposer une étiquette adhésive sur la carte en matière plastique (106).

7. Procédé selon l'une des revendications 1 à 6, caractérisé en ce que
une série de cartes en matière plastique sont réunies et assemblées avec un support de carte, le même numéro de tâche d'impression étant associé à chacune des cartes de la série des cartes en matière plastique.

8. Dispositif de réunion et d'assemblage de cartes en matière plastique, qui sont pourvues d'une marque d'identification, et de supports de cartes imprimés, qui sont associés aux cartes respectives en matière plastique, caractérisé par
- un moyen de support (102) dans lequel sont contenues les cartes en matière plastique (106);
- un moyen (110, VE) destiné à détecter la marque d'identification de la carte en matière plastique (106), et à associer à la carte en matière plastique (106) un numéro de tâche d'impression;
- un moyen de base de données (DB) qui contient des données en fonction de la marque d'identification;
- un moyen d'impression (114) qui imprime sur le support de carte les données lues dans le moyen de base de données (DB) et le numéro de tâche d'impression;
- un moyen (114a, VE) destiné à détecter le numéro de tâche d'impression du support de carte et à comparer, au numéro de tâche d'impression du support de carte, le numéro de tâche d'impression de la carte en matière plastique (106) qui est présent avant l'assemblage au support de carte;
- un moyen de réunion et d'assemblage (112) qui réunit et assemble la carte en matière plastique (106) et le support de carte dans le cas où les numéros de tâche d'impression de la carte en matière plastique (106) et du support de carte coïncident.

9. Dispositif selon la revendication 8, caractérisé en ce que
le numéro de tâche d'impression est un numéro qui se répète de façon cyclique.

10. Dispositif selon la revendication 8 ou 9, caractérisé par
un moyen de tampon (118) qui est agencé de manière à contenir en tampon les cartes en matière plastique.

11. Dispositif selon la revendication 10, caractérisé en ce que
le moyen de tampon (118) reçoit 20 à 80, de préférence environ 50 cartes en matière plastique.

12. Dispositif selon la revendication 10 ou 11, caractérisé en ce que
le numéro de tâche d'impression correspond au nombre des cartes en matière plastique contenues dans le moyen de tampon (118).

13. Dispositif selon l'une des revendications 8 à 12, caractérisé par
un moyen (120), qui dispose une étiquette adhésive sur la carte en matière plastique (106).

14. Dispositif selon l'une des revendications 8 à 13, caractérisé en ce que
le moyen (112) de réunion et d'assemblage réunit et assemble une série de cartes en matière plastique avec un support de carte, chacune des cartes de la série des cartes en matière plastique étant associée au même numéro de tâche d'impression.

15. Dispositif selon la revendication 8, destiné en outre à conditionner les supports de cartes auxquels les cartes en matière plastique ont été appliquées, caractérisé
- en ce que le moyen de support est une tour (202) à cartes, qui contient les cartes en matière plastique;
- en ce que le dispositif comporte un tampon (204) pour contenir en tampon les cartes en matière plastique obtenues de la tour (202) à cartes;
- en ce que le moyen qui détecte la marque d'identification de la carte en matière plastique et qui associe à la carte en matière plastique un numéro de tâche d'impression est un dispositif de traitement (VE);
- en ce que des données dépendant de la marque d'identification peuvent être lues dans la base de données;
- en ce que le moyen d'impression est une imprimante (210) feuille à feuille qui est reliée au moyen de traitement (VE), et qui imprime sur le support de carte en fonction des données reçues du moyen de traitement (VE) et pourvoit du numéro de tâche d'impression le support de carte;
- en ce que le dispositif comporte un moyen de transfert (212), qui reçoit les supports de cartes sortis par l'imprimante feuille à feuille (210), et un magasin de tampon (214) pour papier qui inclut une introduction feuille à feuille, un moyen de pliage transversal et une sortie feuille à feuille et qui reçoit du moyen de transfert (212) le support de carte;
- en ce que le moyen de détection et de comparaison du numéro de tâche d'impression du support de carte est un moyen lecteur qui détecte le numéro de tâche d'impression du support de carte et le transmet au moyen de traitement (VE), et qui détermine si le numéro de tâche d'impression du support de carte qu'il a transmis coïncide avec celui de la carte en matière plastique qui est présent avant l'assemblage avec le support de carte;
- en ce que le moyen de réunion et d'assemblage est un moyen applicateur (220) qui est relié au moyen de traitement (VE), qui réunit et assemble la carte en matière plastique provenant du tampon (204) avec le support de carte, et sort le support de carte accompagné de la carte en matière plastique lorsque les numéros de tâche d'impression de la carte en matière plastique et du support de carte coïncident; et
- en ce que le dispositif comporte un dispositif (250) de conditionnement du support de carte, auquel la carte en matière plastique a été appliquée.

16. Dispositif selon la revendication 8, destiné en outre au conditionnement du support de carte auquel la carte en matière plastique a été appliquée, caractérisé
- en ce que le moyen de support est une tour (202) à cartes, qui contient les cartes en matière plastique;
- en ce que le dispositif comporte un tampon (204) pour contenir en tampon les cartes en matière plastique obtenues de la tour (202) à cartes;
- en ce que le moyen qui détecte la marque d'identification de la carte en matière plastique et qui associe à la carte en matière plastique un numéro de tâche d'impression est un moyen de traitement (VE);
- en ce que des données dépendant de la marque d'identification peuvent être lues dans la base de données (DB);
- en ce que le moyen d'impression est une imprimante (302) sur papier sans fin qui est reliée au moyen de traitement (VE), et qui imprime sur le support de carte en fonction des données reçues du moyen de traitement (VE) et pourvoit du numéro de tâche d'impression le support de carte;
- en ce que le dispositif comporte un tampon en boucle (304), agencé à distance de l'imprimante du papier sans fin (302), et une machine de découpe (306) qui découpe le papier sans fin en éléments individuels
- en ce que le moyen de détection et de comparaison du numéro de tâche d'impression du support de carte est un moyen lecteur qui détecte le numéro de tâche d'impression du support de carte et le transmet au moyen de traitement (VE), et qui détermine si le numéro de tâche d'impression du support de carte qu'il a transmis coïncide avec celui de la carte en matière plastique qui est présent avant l'assemblage avec le support de carte;
- en ce que le dispositif comporte un moyen (308) de pliage transversal qui reçoit le papier découpé en éléments individuels;
- en ce que le moyen de réunion et d'assemblage est un moyen applicateur (220) qui est relié au moyen de traitement (VE), qui réunit et assemble la carte en matière plastique provenant du tampon (204) avec le support de carte, et sort le support de carte accompagné de la carte en matière plastique lorsque les numéros de tâche d'impression de la carte en matière plastique et du support de carte coïncident; et
- en ce que le dispositif comporte un dispositif (250) de conditionnement du support de carte, auquel la carte en matière plastique a été appliquée.

17. Dispositif selon la revendication 8, destiné en outre à conditionner les supports de cartes auxquels les cartes en matière plastique ont été appliquées, caractérisé
- en ce que le moyen de support est une tour (202) à cartes, qui contient les cartes en matière plastique;
- en ce que le moyen qui détecte la marque d'identification de la carte en matière plastique et qui associe à la carte en matière plastique un numéro de tâche d'impression est un moyen de traitement (VE);
- en ce que des données dépendant de la marque d'identification peuvent être lues dans la base de données;
- en ce que le dispositif comporte une installation d'alimentation (404) qui contient des papiers déjà imprimés au préalable, non personnalisés, et un premier moyen (406) de changement de direction qui est alimenté par le moyen d'alimentation (404);
- en ce que le moyen d'impression est une unité d'imprimante (408) à jets d'encre qui reçoit du premier dispositif (406) de changement de direction le papier imprimé au préalable, non personnalisé, et imprime sur le support de carte en fonction des données reçues du moyen de traitement (VE) et pourvoit du numéro de tâche d'impression le support de carte;
- en ce que le dispositif comporte un deuxième moyen (410) de changement de direction qui reçoit les supports de carte imprimés et comporte un dispositif de pliage transversal;
- en ce que le moyen de détection et de comparaison du numéro de tâche d'impression du support de carte est un moyen lecteur qui détecte le numéro de tâche d'impression du support de carte et le transmet au moyen de traitement (VE), et qui détermine si le numéro de tâche d'impression du support de carte qu'il a transmis coïncide avec celui de la carte en matière plastique qui est présent avant l'assemblage avec le support de carte;
- en ce que le moyen de réunion et d'assemblage est un moyen applicateur (220) qui est relié au moyen de traitement (VE), qui réunit et assemble la carte en matière plastique avec le support de carte, et sort le support de carte accompagné de la carte en matière plastique lorsque les numéros de tâche d'impression de la carte en matière plastique et du support de carte coïncident; et
- en ce que le dispositif comporte un dispositif (250) de conditionnement du support de carte, auquel la carte en matière plastique a été appliquée.

18. Dispositif selon l'une des revendications 15 à 17, caractérisé en ce que le dispositif (250) de conditionnement du support de carte, auquel la carte en matière plastique a été appliquée, comporte les particularités suivantes
- un moyen (252) de changement de direction;
- un moyen (254) de pliage longitudinal;
- une station de collecte (256);
- une bande (258) pour le transport à l'état réuni;
- un moyen (262) de conditionnement et de fermeture;
- un moyen (262) de sortie; et
- une bande transporteuse à lamelles (264).
